# EUROPEAN PATENT APPLICATION

(11) **EP 2 591 853 A1**
(43) Date of publication of application: **15.05.2013**
(21) Application number: 11188349.2
(22) Date of filing: 09.11.2011
(51) Int. Cl.: B01J 19/18

(54) **Method for manufacturing zeolites and device for manufacturing zeolites**

(30) Priority: 08.11.2011 PL 39690811
(71) Applicant: Politechnika Lubelska, 20-618 Lublin (PL)
(72) Inventor: Franus, Wojciech, 20-515 Prawiedniki (PL)
(74) Representative: Sielewiesiuk, Jakub

(57) **Abstract**

The invention relates to a method for manufacturing zeolites in a reactor, comprising the following steps:
a) introducing water into the reactor,
b) introducing NaOH into the reactor, preferably in form of granules,
c) introducing fly ash into the reactor,
d) heating the mixture of water, NaOH and fly ash in the reactor to a temperature of 60°C to 90°C, preferably of 75°C to 80°C.
e) conducting zeolite synthesis reaction in the reactor over a period of 12 to 72 hours, preferably for 24 to 36 hours,
f) removing the product of step e) from the reactor and separating the zeolitic material from an aqueous solution of NaOH,

characterized in that
in step e) the reaction mixture in the reactor is alternately mixed by means of a mixer (6) and pumped out from the reactor (8) and again introduced into the reactor by means of a pump (10).

The invention also relates to a device for performing the above mentioned method of producing zeolites.

## Description

The subject of the invention is a method for manufacturing zeolites in a reactor and a device for manufacturing zeolites, enabling the application of such method. More specifically, the subject of the invention is a method for obtaining zeolitic material, which is a mixture of zeolites of the following types: Na-P1, Linde-A and Na-X, and a device for obtaining such materials. Synthesis reactants are fly ashes (class F) derived from hard coal combustion in pulverized-fuel boilers, sodium hydroxide and water. Zeolitic material is obtained from hydrothermal reaction conducted on the basis of the device of invention.

From the scientific publications many methods of zeolitic material synthesis are known. Main types of this kind of synthesis include among others:
- hydrothermal synthesis at atmospheric pressure (Derkowski A; Franus W; Beran E; Czímerová A., 2006: Properties and potential applications of zeolitic materials produced from fly ash using simple method of synthesis. Powder Technology, Vol. 166/1, p. 47-54),
- the hydrothermal synthesis at elevated pressure, (Querol X., Umaña J.C., Plana F., Alastuey A., Lopez-Soler A., Medinaceli A., Valero A.,. Domingo M.J, Garcia-Rojo E., 2001: Synthesis of zeolites from fly ash at pilot plant scale. Examples of potential applications. Fuel, Vol. 80, p. 857-865),
- fusion method (Berkgaut V, Singer A., 1996: High capacity cation exchanger by hydrothermal zeolitization of coal fly ash. Applied Clay Science, Vol. 10, p. 369-378),
- molten-salt method (Park M., Choi Ch.L., Lim W.T, Kim M.Ch., Choi J., Heo N.H., 2000: Molten-salt method for the synthesis of zeolitic material. Microporous and Mesoporous Materials, Vol. 37, p. 81-89).

These methods consist mainly in mutual reaction between fly ash and aqueous solution of NaOH or KOH base in one vessel (for a hydrothermal reaction at temperatures from 20°C to 200°C), and for the fusion and molten-salt methods the reactants react with each other in a solid state at temperatures of about 200°C - 350°C for molten salts, and of about 550°C - 600°C for fusion.

From the Polish patent no. PL 196132 entitled "Sposób otrzymywania zeolitów typu Na-P1 i analcymu z popio 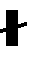 ów lotnych ze spalania w 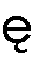 gli kamiennych w kot 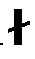 ach py 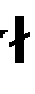 owych, poprzez ich aktywacj 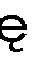 hydrotermaln 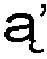 " ("*A method for obtaining Na-P1-type zeolites and analcime from fly ash derived from the hard coal combustion in pulverized-fuel boilers by their hydrothermal activation"*)*,* a zeolite production method is known, that consists in that the fly ash having the molar ratios of SiO₂ to Al₂O₃ from 1.7 to 2.8, is preactivated in normal conditions with a NaOH solution having concentration in the range from 4 wt. % to 36 wt. % of Na₂O, and then an aqueous suspension is made using 1 part by weight of ash and 6 parts by weight of water, and by its homogenization. Actual ash/water suspension synthesis is conducted in an autoclave, in the temperature range of 130°C to 200°C, over a period of 3 to 48 hours, under the pressure corresponding to the pressure of vapour produced during the autoclave heating with constant intense mixing of autoclave contents. Then, the resulting mixture containing zeolites is cooled to room temperature, the aqueous solution is decanted and the material is rinsed with hot distilled water, in order to remove the excess of used NaOH, and dried. By described method it is possible to obtain the zeolitic material rich in zeolites of type NaP1 and analcime. However, this method does enable to obtain zeolite material only at laboratory conditions (Adamczyk Z, Bia 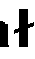 ecka B., 2005: Hydrothermal synthesis of zeolite from Polish coal fly ash. Polish Journal of Environmental Studies, Vol. 14/6, p. 713-719). A drawback is the fact, that high reaction efficiency (65-90%) requires that the process takes place at temperatures of 150-200°C, which considerably increases the final material costs, and activation pre-treatment requirements. Moreover, resulting analcime has channel inner diameter of about 2.5A, which considerably decreases its practical possible use.

A method of producing zeolites from fly ashes on a pilot scale using hydrothermal method under atmospheric pressure is also known (Kikuchi R., 1999: Application of coal ash to environment al improvement. Transformation into zeolite potassium fertilizer, and FGD absorbet. Recources, Conservation and Recycling Vol. 27: p. 333-346). This process takes place in a reactor, into which the fly ash is supplied simultaneously with NaOH solution with concentration of 48 wt. %, the temperature is 95-105°C, and the reaction time is 5 hours. A drawback of such solution is the fact, that author did not indicate what kind of zeolites is produced this way, while it is very important for a future application. Only ion-exchange capacity (CEC) was given, and it was about 200 meq/100g (determined by measuring the Ca²⁺ concentration in extracted CaCl₂/Ca(CH₃COO)₂ solution.

The present inventors, trying to develop a method for obtaining zeolites that would be useful on an industry scale, starting from laboratory solutions similar to these described above, have unexpectedly met the problem consisting in that once reactor is charged with reactants and reaction is activated, inside the reactor sedimentation of ash and sodium hydroxide takes place, that results in drain valve plugging and does not allow to easily extract the zeolitic reaction product. In spite of using mechanical mixer, which at the same time homogenized reaction solution and kept it in suspension, sedimentation process still existed. This problem was surprisingly and successfully solved by using a closed system for pumping an aqueous suspension of fly ash and sodium hydroxide by means of a membrane pump. Moreover, thanks to appropriate order of reactant loading (i.e. water first, then NaOH, and later fly ash), it is possible to avoid plugging of reactant loading hole in the reactor.

Therefore, the object of the invention is to provide a method for manufacturing zeolites of defined structure types without above mentioned inconveniences, at the same time enabling convenient, complete and repeatable extraction of reaction product from a tank.

It is the further aim of the present invention to provide a device for producing zeolites, specially adapted to realize the above mentioned method.

According to the invention, the method for manufacturing zeolites in a reactor, comprising the following steps:
a) introducing water into the reactor,
b) introducing NaOH into the reactor, preferably in form of granules,
c) introducing fly ash into the reactor,
d) heating the mixture of water, NaOH and fly ash in the reactor to a temperature of 60°C to 90°C, preferably of 75°C to 80°C.
e) conducting zeolite synthesis reaction in the reactor for 12 to 72 hours, preferably for 24 to 36 hours,
f) removing the product of step e) from the reactor and separating the zeolite material from an aqueous solution of NaOH,
is characterized in that
in step e) the reaction mixture in the reactor is alternately mixed by means of a mixer and pumped out from the reactor and again introduced into the reactor by means of a pump.

Preferably, introduction of NaOH in step b) and/or introduction of fly ash in step c) is performed through a weight tank, suspended on weight strain gauges, preferably equipped with vibrators.

Preferably, during the whole step e), in the reactor a temperature of 60°C to 90°C, preferably of 75°C to 80°C is maintained.

In a particularly preferred example of the invention, in step e) the following sequence of mixing the reaction mixture in the reactor is used: alternate use of the pump for 10 minutes and of the mixer for 10 minutes, the pump efficiency preferably being 100l/min., and the mixer rotational speed preferably being about 450 rpm.

Preferably, step f) is performed by means of a hydraulic press, wherein the zeolite material is separated from the aqueous solution of NaOH, parameters of the hydraulic press preferably being as follows: the pressure of pressing the press plates against each other is 60 MPa, the pressure of feeding the material from the reactor is 0.15 MPa, the material flow from the reactor is 10 l/min.

Preferably, the aqueous solution of NaOH obtained on the hydraulic press is driven to a destined tank.

Preferably, the zeolite material obtained on the hydraulic press is rinsed with water, at least three times, preferably at pressure of water serving for rinsing the zeolitic material of about 0.4 MPa.

According to the invention, the zeolitic material obtained on the hydraulic press may be dried in a calciner, preferably over a period of 3 to 8 hours, more preferably over a period of 5 to 8 hours, preferably at a temperature of about 250°C.

In a preferred scenario of the invention, the reactor with a working volume of approximately 1m³ is used, wherein:
- in step a), 70 to 100 litres of water, preferably about 90 litres of water is introduced to the reactor,
- in step b), 10 to 15 kg of NaOH, preferably about 12 kg of NaOH is introduced to the reactor,
- in step c), 10 to 25 kg of fly ash, preferably about 15 to 21 kg of fly ash is introduced to the reactor,

Preferably, the fly ash, that is used, is selected from the group comprising:
- the fly ash of the following composition: from 44.39 to 53.25% by weight of SiO₂, 21.89-32.19% by weight of Al₂O₃, 4.17-5.98% by weight of Fe₂O₃, 1.16-16.75% by weight of CaO, 1.29-2.29% by weight of MgO, 0.49-0.74 % by weight of Na₂O, 2.67-2.87% by weight of K₂O;
- the fly ash of the following composition: 53.25% by weight of SiO₂, 26.67 % by weight of Al₂O₃, 5.98% by weight of Fe₂O₃, 2.88% by weight of CaO, 2.29% by weight of MgO, 0.74 % by weight of Na₂O, 2.82% by weight of K₂O;
- the fly ash of the following composition: 52.12% by weight of SiO₂, 32.19 % by weight of Al₂O₃, 5.17% by weight of Fe₂O₃, 1.16% by weight of CaO, 1.29% by weight of MgO, 0.49 % by weight of Na₂O, 2.87% by weight of K₂O;
- the fly ash of the following composition: 44.39% by weight of SiO₂, 21.89 % by weight of Al₂O₃, 4.17% by weight of Fe₂O₃, 16.75% by weight of CaO, 2.05% by weight of MgO, 0.74 % by weight of Na₂O, 2.67% by weight of K₂O.

The invention also relates to a device for manufacturing zeolites, comprising:
- a reactor, preferably equipped with heaters,
- a tank for NaOH, preferably equipped with a vibrator,
- a tank for fly ash, preferably equipped with a vibrator,
- a weight tank, the content of which may be transported to the reactor, preferably suspended on weight strain gauges and preferably provided with a vibrator,
- conveyors, preferably worm conveyors, for transporting material from tanks to the weight tank,
- a water supply system,
that is characterized in that
the reactor is equipped with mixer, and a reactor outlet is connected with the pump, preferably via a valve, the pump outlet being connected with the reactor by means of a hydraulic conduit, such that the material pumped by the pump can go back to the reactor.

Preferably, the device of invention further comprises a hydraulic press connected with the reactor outlet by means of hydraulic conduits, for separating a zeolitic material from an aqueous solution of NaOH by pressing.

Preferably, the device comprises a tank for the aqueous solution of NaOH obtained by pressing in said press.

Preferably, device equipped with the press comprises a water system for rinsing the zeolitic material in the press.

In a preferred scenario of the invention, the device comprises a calciner (18) for drying the zeolitic material.

Thanks to using the closed system for pumping an aqueous suspension of fly ash and sodium hydroxide by means of a membrane pump, it is possible to effectively prevent sedimentation in the reactor and the drain valve plugging. The best conditions of this process were observed by using a sequentially working pump-mixer system. Such system operates in the following sequence: 10 minutes of mechanical mixer operation, with a rotational speed of about 450 rpm, and 10 minutes of membrane pump operation, with an efficiency of 100l/min. Such system provides a constant maintaining of reaction solution in suspended state. Such state of solution (i.e. suspension), being a mixture of zeolites and unreacted fly ash components (mullite, quartz, aluminosilicate glass etc.) and NaOH, prevents sedimentation and drain valve plugging. Moreover, it enables to remove detrimental excess of NaOH from reaction product by means of a hydraulic press. The optimal parameters of the press operation were as follows:
- the pressure of pressing the press plates against each other: 60 MPa,
- the pressure of feeding the material from the reactor: 0.15 MPa,
- the material flow from the reactor is on average 10 l/min,
- the pressure of water serving for rinsing the zeolitic material: 0.4 MPa.

Use of hydraulic press enables at the same time to reuse the reaction solution (obtained directly from the press) by storing it in a tank and pumping it again in a quantitatively controlled manner to the next synthesis reaction.

Thanks to the method for the present invention it is possible to obtain different mixtures of zeolite minerals depending on synthesis process parameters (temperature, time, reactant concentration), i.e. zeolites of type Na-P1, Linde-A i Na-X etc., the total quantitative content of which is up to 70 wt. %.

The use of such method of obtaining the zeolitic material in the dedicated, proposed prototype device provides minimization of wastes dumped to the environment (so called Circumstantial Combustion Products CCP), the main component of which are fly ashes. In this way, the risk for the environment associated with its storing is eliminated. Proposed method enables to use waste as a raw material of full value for producing zeolitic materials that find wide use in gas drying and purification, waste treatment, building industry and agriculture.

### Preferred embodiment of the invention

The invention will now be more specifically presented in a preferred embodiment, with reference to the attached figures, in which:
- Fig. 1: shows a picture of the device for producing zeolites according to the invention,
- Fig. 2: shows a construction scheme of the device for producing zeolites according to the invention,
- Fig. 3: shows test results documentation of the zeolitic material obtained by the method and device of invention: (a) microphotographs of the zeolitic material, (b) test results for phase composition (by XRD method) and textural parameters (by N₂ vapour method).

In the drawing, the following reference marks were used: 1 - NaOH storage tank with a vibrator, 2 - fly ash storage tank with a vibrator, 3 - worm conveyor for transporting NaOH, 4 - worm conveyor for transporting the fly ash, 5 - weight tank suspended on three weight strain gauges with a vibrator, 6 - mechanical mixer, 7 - heaters with a system for controlling the reactants level and reaction temperature, 8 - reaction tank, 9 - pneumatic membrane valve, 10 - membrane pump, 11 - compressor, 12 - water supply with a flowmeter operated volume control, 13 - hydraulic press, 14 - aqueous solution of NaOH from synthesis reaction, 15 - aqueous solution from rinsing the zeolitic material in the press, 16 - waste waters for utilization, 17 - conveyor for calciner, 18 - calciner.

### Example 1

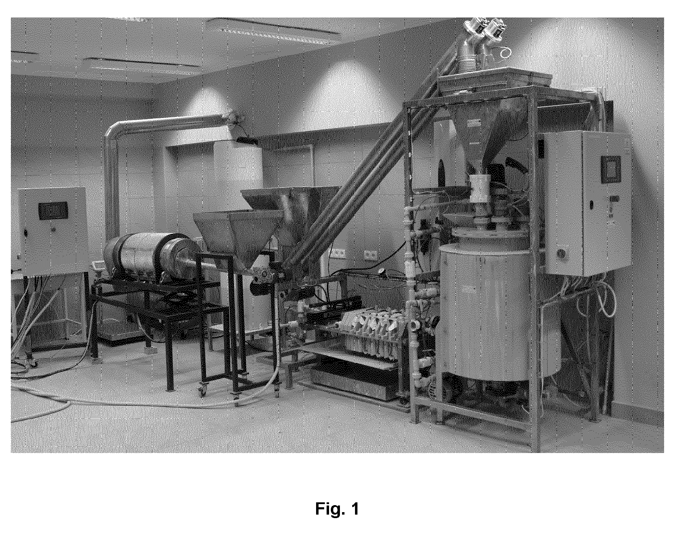

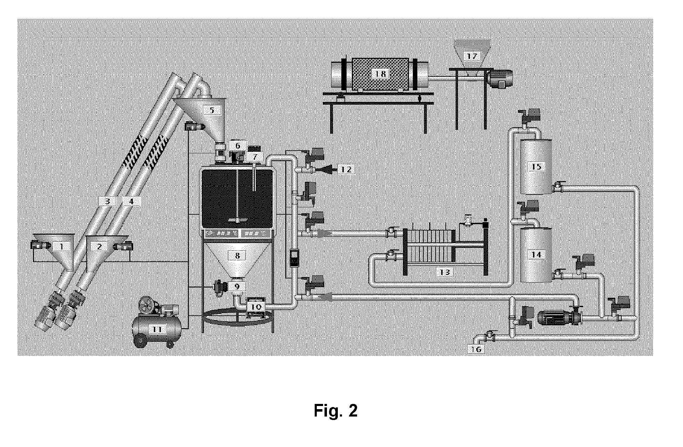

Fig. 1 presents a photograph, and Fig. 2 - the construction scheme of the device for manufacturing zeolites, being a preferred embodiment of the present invention. According to the invention, the device comprises a reaction tank 8, equipped with a mechanical mixer 6 and a system of three heaters 7 with a probe for controlling the reaction temperature and the level of reactants used for synthesis reaction. The tank 8 is made of PP, its volume being 1.3m³ (working volume of 1 m³). At the tank 8 outlet, a pneumatic membrane valve 9 and a membrane pump 10 are installed. By means of an electronic flowmeter 12, a predetermined amount of water is introduced to the reactor 8, when the drain valve 9 is closed. Once achieving predetermined amount of water, the drain valve 9 opens. Then, NaOH in form of granules, that is present in a storage tank 1, is fed to the reactor 8. By means of a worm gear 3 it is transferred to a weight tank 5, suspended on three weight strain gauges, wherein a predetermined weigh is batched. Then, it is dosed/dumped into the reaction tank 8 and the mechanical mixer 6 and the membrane pump 10 are turned on. In order that the whole mass of NaOH is dumped, the weight tank 5 is additionally equipped with vibrators. The next synthesis reactant is fly ash. By means of a worm gear 4, it is transferred from the storage tank 2 to the weight tank 5, where - once the predetermined weight is achieved - the ash is dumped to the reactor 8. In order that the whole mass of ash is dumped, the weight tank 5 is additionally equipped with vibrators. When the entire weight tank 5 content is dumped, three heaters 7, that heat reactants to a predetermined temperature of synthesis reaction, are activated. When the predetermined temperature is reached, the mixer 6 and the membrane pump 10 begin to work in a sequential manner. Once the predetermined temperature is reached, the heaters 7 are switched off. As the reaction tank 8 is additionally equipped with a temperature probe, when a temperature in the tank 8 drops by 3°C, the heating system turns on, in order to heat reactants to the predetermined temperature. When a predetermined time of reaction expires, the heating system automatically turns off, and by means of a touch screen coupled with the membrane pump 10 a batch of reaction product is driven onto the hydraulic press 13, wherein the zeolitic material is separated from the aqueous solution of NaOH. Post-reaction product from the first rinsing is driven to the tank 14, and solution from subsequent rinsings is driven to the tank 15. Zeolitic material manually extracted from the press 13 is fed to a conveyor with a worm gear 17 and is transferred to a calciner 18, where it is dried.

### Example 2

A method for manufacturing zeolites in a preferred embodiment of the present invention is performed as follows:
1. 70 to 100 litres of water is introduced to the reactor 8 by means of the electronic flowmeter 12, when the drain valve 9 is closed. Most preferably for the quality of synthesis reaction products, 90 litres of water is batched.
2. NaOH in form of granules, that is present in the storage tank 1, is transferred, by means of the worm gear 3, to the weight tank 5, suspended on three weight strain gauges, wherein its mass of 10 to 15 kg is batched. The highest zeolite content in reaction product was achieved with a batched NaOH weight of 12 kg. Once NaOH is dumped from the weight tank 5, the mechanical mixer 6 and membrane pump 10 are turned on in a continuous mode, until the process of loading of the next reactant, i.e. fly ash, has been completed.
3. Then, the fly ash derived from the hard coal combustion of the following composition is fed to the reaction tank 8: from 44.39 to 53.25% by weight of SiO₂, 21.89-32.19% by weight of Al₂O₃, 4.17-5.98% by weight of Fe₂O₃, 1.16-16.75% by weight of CaO, 1.29-2.29% by weight of MgO, 0.49-0.74 % by weight of Na₂O, 2.67-2.87% by weight of K₂O. This ash is transferred from the storage tank 2 by means of the worm gears 4 to the weight tank 5, suspended on three weight strain gauges, until the weight of about 20 kg is achieved. When this predetermined amount is batched, the ash is poured from this tank 5 to the reactor 8. In order that the whole mass of ash is dumped, the weight tank 5 is equipped with vibrators.
4. Good results were achieved for the fly ash of the following chemical composition: 53.25% by weight of SiO₂, 26.67 % by weight of Al₂O₃, 5.98% by weight of Fe₂O₃, 2.88% by weight of CaO, 2.29% by weight of MgO, 0.74 % by weight of Na₂O, 2.82% by weight of K₂O. Most preferably, however, the fly ash of the following composition is used: 52.12% by weight of SiO₂, 32.19 % by weight of Al₂O₃, 5.17% by weight of Fe₂O₃, 1.16% by weight of CaO, 1.29% by weight of MgO, 0.49 % by weight of Na₂O, 2.87% by weight of K₂O. The ash is transferred from the storage tank 2 by means of the worm gear 4 to the weight tank 5, until the weight of 15 to 25kg is achieved, wherein the highest zeolite content was found for the weight of 21 kg. When this predetermined amount is batched, the ash is dumped to the reactor 8. In order that the whole mass of ash is dumped, the weight tank 5 is additionally provided with vibrators.
5. Once the predetermined masses are batched and dumped (water, fly ash and NaOH), three heaters 7 in the tank are turned on. Reactants combining process (NaOH and water) is an exothermic reaction (reactants are heated to the temperature of about 50°C). The heaters 7 heat the reactants up to the temperature of 60 to 90°C, wherein for such reactant proportion it is preferred to heat the reaction solution up to the temperature of 75°C, most preferably to the temperature of 80°C.
6. When the most preferred temperature in the reactor 8 (that is given above) is reached, the mixer 6 and the membrane pump 10 begin to work in a sequential manner. The functioning of these two devices must be coordinated, because mixing by means of the mixer 6 only, does not give satisfying results, and the reaction material sediments at the bottom of the tank 8, what makes its extraction after completion of reaction cycle remarkably more difficult. In case of using the membrane pump 10 only, the reactants will behave similarly as if using the mixer 6 alone. It's not until both devices 6, 10 work sequentially, that it is possible to avoid sedimentation of suspension at the tank 8 bottom and it is possible to extract the reaction product from the tank 8. The best results (easiness of discharge) were observed for the following sequence: alternately, the membrane pump 10 for 10 minutes + the mixer 6 for 10 minutes.
7. Advantageous results (content and type of zeolitic materials) are provided by conducting the synthesis process over a period of 12 to 72 hours. Preferably, the synthesis process runs at least 24 hours. However, the highest content of produced Na-P1-type zeolite material was observed during a 36-hour synthesis process.
8. Once the reaction cycle is completed, the heating system turns off automatically, and by means of a touch screen coupled with the membrane pump 10 a batch of reaction product is driven onto the hydraulic press 13, wherein the zeolitic material is separated from the aqueous solution of NaOH. It is advantageous to driven this solution to another tank, as it makes using it in subsequent reaction cycles easier. It is then not necessary to modify its initial composition. That is why said solution is driven to the tank 14, while solutions from rinsing the zeolitic material are driven to the tank 15. The zeolitic material should be rinsed with water at least three times from the NaOH excess.
9. The zeolitic material manually extracted from the press is fed to a conveyor with a worm gear 17 and is transferred to a calciner 18, where it is dried over a period of 3 to 8 hours. However, most preferably is to dry it over a period of at least 5 hours, at the temperature of 250°C.

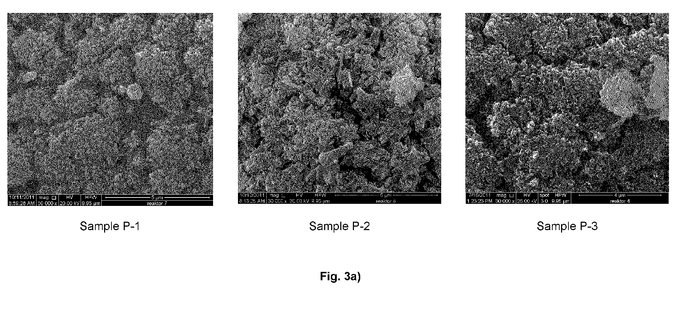

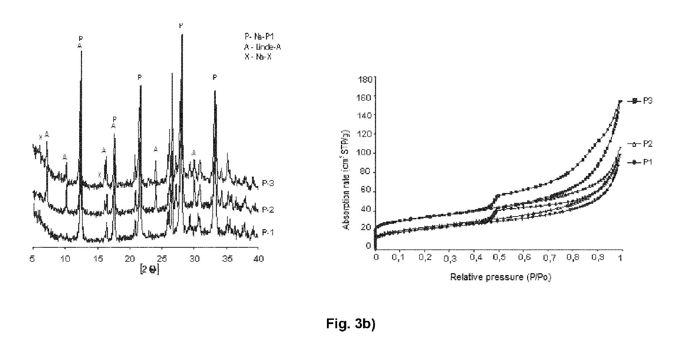

Technological process conducted this way enables to obtain a zeolitic material rich in Na-P1-type zeolite. Tests and characterization of the zeolitic material obtained according to the invention by the method described in the present example were made. Test results obtained from this material are shown in Figure 3 (sample P1) and the table below.

**Table**

| **Material** | **S_{BET} [m²/g]** | **V_{mic} [cm³/g]** | **S_{mic} [m²/g]** | **Vₘₑₛ [cm³/g]** | | **Sₘₑₛ [m²/g]** | | **Average pore size [nm]** | | **CEC [meq/100g]** |
|---|---|---|---|---|---|---|---|---|---|---|
| | | | | Ads | Des | Ads | Des | Ads | Des | |
| **P-1** | 76.6 | 0.004 | 8.8 | 0.14 | 0.15 | 58.1 | 64.2 | 10.0 | 9.1 | 72.6 |
| **P-2** | 82.2 | 0.003 | 7.7 | 0.16 | 0.16 | 65.1 | 71.0 | 9.7 | 8.9 | 63.4 |
| **P-3** | 116 | 0.019 | 39.8 | 0.22 | 0.22 | 73.5 | 96.7 | 11.8 | 9.3 | 53.9 |

### Example 3

The result of conducting synthesis process is dependent on the following parameters: reactants mass, chemical composition of ashes, process temperature and reaction time. Procedure was analogical to the procedure described in example 2, with the only difference in that the time of synthesis process was 24 hours, and the chemical composition of the ash used was as follows: 44.39% by weight of SiO₂, 21.89 % by weight of Al₂O₃, 4.17% by weight of Fe₂O₃, 16.75% by weight of CaO, 2.05% by weight of MgO, 0.74 % by weight of Na₂O, 2.67% by weight of K₂O.

Technological process conducted this way enables to obtain a zeolitic material rich in Na-P1-type and Linde-A-type zeolites.

Tests and characterization of the zeolitic material obtained according to the invention by the method described in the present example were made. Test results obtained from this material are shown in Fig. 3 (sample P-2) and the table (below the example 2).

### Example 4

Procedure was analogical to the procedure described in example 2, with the only difference in that the temperature of synthesis process was 75°C, and the chemical composition of the fly ash used for synthesis was the same as in the example 3.

Such conditions of synthesis process enable to obtain a zeolitic material rich in Na-P1-type, Linde-A-type and Na-X-type zeolites. Test results obtained from this material are shown in Fig. 3 (sample P-3) and the table (below the example 2).

## Claims

1. A method for manufacturing zeolites in a reactor, comprising the following steps:
a) introducing water into the reactor,
b) introducing NaOH into the reactor, preferably in form of granules,
c) introducing fly ash into the reactor,
d) heating the mixture of water, NaOH and fly ash in the reactor to a temperature of 60°C to 90°C, preferably of 75°C to 80°C.
e) conducting zeolite synthesis reaction in the reactor over a period of 12 to 72 hours, preferably over a period of 24 to 36 hours,
f) removing the product of step e) from the reactor and separating the zeolite material from an aqueous solution of NaOH,
**characterized in that**
in step e) the reaction mixture in the reactor (8) is alternately mixed by means of a mixer (6) and pumped out from the reactor (8) and again introduced into the reactor by means of a pump (10).

2. The method according to claim 1, **characterized in that** introduction of NaOH in step b) and/or introduction of fly ash in step c) is performed through a weight tank (5), suspended on weight strain gauges, preferably provided with vibrators.

3. The method according to claim 1 or 2, **characterized in that** during the whole step e), in the reactor (8), a temperature of 60°C to 90°C, preferably of 75°C to 80°C is maintained.

4. The method according to any one of the preceding claims, **characterized in that** in step e) the following sequence of mixing the reaction mixture in the reactor (8) is used: alternate use of the pump (10) for 10 minutes and of the mixer (6) for 10 minutes, the pump efficiency (10) preferably being 100l/min., and the mixer rotational speed preferably being about 450 rpm.

5. The method according to any one of the preceding claims, **characterized in that** step f) is performed by means of a hydraulic press (13), wherein the zeolitic material is separated from the aqueous solution of NaOH, parameters of the hydraulic press (13) preferably being as follows: the pressure of pressing the press plates (13) against each other is 60 MPa, the pressure of feeding the material from the reactor (8) is 0.15 MPa, the material flow from the reactor (8) is 10 l/min.

6. The method according to claim 5, **characterized in that** the aqueous solution of NaOH obtained on the hydraulic press (13) is driven to a dedicated tank (14).

7. The method according to claim 5 or 6, **characterized in that** the zeolitic material obtained on the hydraulic press (13) is rinsed with water, at least three times, preferably at pressure of water serving for rinsing the zeolitic material of about 0.4 MPa.

8. The method according to claim 5, 6 or 7, **characterized in that** the zeolitic material obtained on the hydraulic press (13) is dried in a calciner (18), preferably over a period of 3 to 8 hours, more preferably over a period of 5 to 8 hours, preferably at a temperature of about 250°C.

9. The method according to any one of the preceding claims, **characterized in that** the reactor (8) with a working volume of approximately 1 m³ is used, wherein:
• in step a) 70 to 100 litres of water, preferably about 90 litres of water is introduced to the reactor (8),
• in step b) 10 to 15 kg of NaOH, preferably about 12 kg of NaOH is introduced to the reactor (8),
• in step c) 10 to 25 kg of fly ash, preferably about 15 to 21 kg of fly ash is introduced to the reactor (8),

10. The method according to any one of the preceding claims, **characterized in that** the fly ash, that is used, is selected from the group comprising:
• the fly ash of the following composition: from 44.39 to 53.25% by weight of SiO₂, 21.89-32.19% by weight of Al₂O₃, 4.17-5.98% by weight of Fe₂O₃, 1.16-16.75% by weight of CaO, 1.29-2.29% by weight of MgO, 0.49-0.74 % by weight of Na₂O, 2.67-2.87% by weight of K₂O;
• the fly ash of the following composition: 53.25% by weight of SiO₂, 26.67 % by weight of Al₂O₃, 5.98% by weight of Fe₂O₃, 2.88% by weight of CaO, 2.29% by weight of MgO, 0.74 % by weight of Na₂O, 2.82% by weight of K₂O;
• the fly ash of the following composition: 52.12% by weight of SiO₂, 32.19 % by weight of Al₂O₃, 5.17% by weight of Fe₂O₃, 1.16% by weight of CaO, 1.29% by weight of MgO, 0.49 % by weight of Na₂O, 2.87% by weight of K₂O;
• the fly ash of the following composition: 44.39% by weight of SiO₂, 21.89 % by weight of Al₂O₃, 4.17% by weight of Fe₂O₃, 16.75% by weight of CaO, 2.05% by weight of MgO, 0.74 % by weight of Na₂O, 2.67% by weight of K₂O.

11. A device for manufacturing zeolites, comprising:
• a reactor (8), preferably provided with heaters (7),
• a tank (1) for NaOH, preferably provided with a vibrator,
• a tank (2) for fly ash, preferably provided with a vibrator,
• a weight tank (5), the content of which may be transported to the reactor (8), preferably suspended on weight strain gauges and preferably provided with a vibrator,
• conveyors, preferably worm conveyors (3, 4), for transporting material from tanks (1, 2) to the weight tank (5),
• a water supply system (12),
**characterized in that**
the reactor (8) is provided with mixer (6), and a reactor outlet is connected with the pump (10), preferably via a valve (9), the pump outlet (10) being connected with the reactor (8) by means of a hydraulic conduit, such that the material pumped by the pump (10) can go back to the reactor (8).

12. The device according to claim 11, **characterized in that** it further comprises a hydraulic press (13) connected with the reactor outlet (8) by means of hydraulic conduits, for separating a zeolitic material from an aqueous solution of NaOH by pressing.

13. The device according to claim 12, **characterized in that** it comprises a tank (14) for the aqueous solution of NaOH obtained by pressing in said press (13).

14. The device according to claim 12 or 13, **characterized in that** it comprises a water system for rinsing the zeolitic material in the press (13).

15. The device according to any one of the preceding claims from 11 to 14, **characterized in that** it comprises a calciner (18) for drying the zeolitic material.
